# EUROPEAN PATENT APPLICATION

(11) **EP 4 008 178 A1**
(43) Date of publication of application: **08.06.2022**
(21) Application number: 21210806.2
(22) Date of filing: 26.11.2021
(51) Int. Cl.: A01K 1/035, A01K 39/012, A01K 39/014, A01K 5/01

(54) **FEEDING TROUGH FOR BIRDS**

(30) Priority: 03.12.2020 IT 202000029636
(71) Applicant: 2 GR di Gobbi Luciano & C. S.N.C., 42015 Correggio (RE) (IT)
(72) Inventor: SACCHETTI, Emer, 41019 SOLIERA, Frazione Limidi MO (IT)
(74) Representative: Modiano, Micaela Nadia

(57) **Abstract**

Feeding trough (1) for birds which comprises a tray (2) for containing feed which is associated with at least one perch (3) for a bird to rest on, and a container (4) for collecting scattered feed, which is open in an upper region and is interposed between the tray (2) and the at least one perch (3).

## Description

The present invention relates to a feeding trough for birds.

Feeding troughs are known which are designed to be applied to the mesh walls of bird cages, in order to contain stocks of feed for feeding the birds accommodated in those cages. Such feeding troughs consist substantially of a tray adapted to contain the feed, which is provided with elements for coupling to the mesh of the cage, and a perch, i.e. an element for the birds to rest on with their feet, which can be integrated at a rim of the tray itself or be protruding with respect to it.

These conventional feeding troughs are not devoid of drawbacks, among which is the fact that while the bird is eating, it leaves a significant quantity of feed fall to the bottom of the cage. Such scattered feed is not recoverable because it is contaminated by excrement or other discarded material deposited on the bottom of the cage.

This fact entails a considerable waste of feed and an increase in the necessary costs of maintaining the birds, as well as a degradation of the hygienic conditions of the birds.

This waste of feed is even more evident in feeding troughs that are provided with a perch that protrudes with respect to the tray, in that after leaning forward to peck at the feed, the bird tends to straighten up on the perch, allowing an even larger quantity of uneaten feed to fall on the bottom of the cage.

In the attempt to limit this drawback, feeding troughs are known which have a covering element of the tray in which an open door is provided in order to allow the bird resting on the perch to lean inside in order to reach the feed contained in the tray. However in this case too when, after pecking in the tray, the bird straightens up on the perch, in so doing allowing some of the feed to fall on the bottom of the cage.

The aim of the present invention is to eliminate the above mentioned drawbacks in the background art, by providing a feeding trough for birds that makes it possible to reduce, or even eliminate, the waste of feed that accumulates on the bottom of the cage in which it is mounted, thus reducing the costs of purchasing the feed and the necessity of carrying out frequent operations to clean the cages. These aspects, which are certainly advantageous for owners of even one or just a few birds, become even more significant for breeders who need to manage a large number of birds, with associated cages and feeding troughs.

Within this aim, an object of the present invention is to improve the conditions of hygiene of the cages in which the birds are accommodated, as well as to improve the level of quality of their feed.

Last but not least, another object of the present invention is to provide a simple structure which is easy and practical to implement, safe in use and effective in operation, and of low cost.

This aim and these and other objects which will become better apparent hereinafter are all achieved by the present feeding trough for birds which presents the characteristics of claim 1 below and is optionally provided with one or more of the characteristics of the dependent claims.

Further characteristics and advantages of the present invention will become better apparent from the detailed description of some preferred, but not exclusive, embodiments of a feeding trough for birds, which is illustrated for the purposes of non-limiting example in the accompanying drawings wherein:
Figure 1 is an exploded perspective view of a first embodiment of a feeding trough for birds according to the present invention;
Figures 2 and 3 are respective perspective views of the feeding trough of Figure 1 in different conditions of assembly;
Figure 4 is a perspective view from below of the feeding trough of Figure 2;
Figure 5 is a front elevation view of the feeding trough of Figure 2;
Figure 6 is a cross-sectional view taken along the line VI-VI of Figure 5;
Figure 7 is a side view of the feeding trough of Figure 2 in the first active configuration, with the container shown in dotted lines in the step of tipping into the second active configuration;
Figure 8 is a side view of the feeding trough of Figure 2 in the second active configuration;
Figure 8a is a partially exploded perspective view of a variation of the first embodiment of the feeding trough according to the invention;
Figure 8b is a perspective view of the feeding trough of Figure 8a applied to a bird cage;
Figure 9 is an exploded perspective view of a second embodiment of the feeding trough according to the invention;
Figure 10 is a front perspective view of the feeding trough of Figure 10 in a possible condition of attachment of the container to the tray;
Figure 11 is a rear perspective view of the feeding trough of Figure 9 with the covering element decoupled from the tray;
Figure 12 is a rear perspective view of the feeding trough of Figure 11;
Figure 12a is a partially exploded perspective view of a variation of the second embodiment of the feeding trough according to the invention;
Figure 13 is a side view of the feeding trough of Figure 10 in the step of coupling the covering element to the tray;
Figure 14 is a side view of the feeding trough of Figure 10 with the covering element coupled to the tray;
Figure 15 is an exploded perspective view of a third embodiment of the feeding trough according to the invention;
Figure 16 is a perspective view of the vessel with associated fixing panel, decoupled from each other;
Figure 17 is a perspective view of the fixing panel of Figure 16 seen from the opposite side;
Figure 18 is a perspective view of the covering element with the associated dividing element, decoupled from each other;
Figure 19 is a perspective view from below of the covering element with the associated dividing element, assembled;
Figure 20 is a perspective view of the tray with the associated partition, decoupled from each other;
Figure 21 is a perspective view of the tray with the associated partition, assembled;
Figure 22 is a side view of the third embodiment of the feeding trough according to the invention in a possible condition of mounting the container to the tray and with the vessel in the first active configuration;
Figure 23 is a front elevation view of the feeding trough of Figure 22;
Figure 24 is a cross-sectional view taken along the line XXIV-XXIV in Figure 23;
Figure 25 is a rear elevation view of the feeding trough of Figure 23;
Figure 26 is a front elevation view of the vessel with the associated fixing panel of Figure 23, the covering element and the tray being partially shown in dotted lines;
Figure 27 is a front elevation view of the feeding trough of Figure 23 with the vessel in the second active configuration;
Figure 28 is a cross-sectional view taken along the line XXVIII-XXVIII in Figure 27;
Figure 29 is a rear elevation view of the feeding trough of Figure 27;
Figure 30 is a front elevation view of the vessel with the associated fixing panel of Figure 27, the covering element and the tray being partially shown in dotted lines;
Figure 30a is a rear elevation view of a variation of the third embodiment of the feeding trough according to the invention;
Figure 30b is a rear elevation view of the feeding trough of Figure 30a applied to a bird cage;
Figures 31a, 31b, 31c, 31d are schematic cross-sectional views that show successive steps of using the first embodiment of the feeding trough according to the invention.

With reference to the figures, the reference numeral 1 generally designates a feeding trough for birds.

The feeding trough 1 comprises a tray 2 for containing feed which is associated with at least one perch 3 for a bird to rest on, and a container 4 for collecting scattered feed, which is open in an upper region and is interposed between the tray 2 and the perch 3.

The tray 2 is constituted by a body substantially parallelepiped in shape, internally hollow and open in an upper region. However, the possibility is not ruled out of its having a different shape.

The container 4 is also constituted by a body substantially parallelepiped in shape, internally hollow and open in an upper region. However, the possibility is not ruled out that it can have a different shape.

In this manner when the bird positions its legs resting on the perch 3, leans forward toward the tray 2 in order to peck at the feed and then straightens up on the perch in order to eat, the feed that falls from its beak is collected in the container 4 below.

The container 4, in fact, extends in a lower region to the upper edge of the tray 3 in order to facilitate the collection of the scattered feed. It should be noted that the container 4 collects both uneaten feed, such as for example seeds or the like, and also feed discards, such as remaining husks.

Preferably the perch 3 is defined integrally with the container 4. Even more preferably the perch 3 is incorporated in the container 4 at the corresponding upper edge at the opposite side of the tray 2. However, the possibility is not ruled out that the perch 3 could be contoured differently or associated differently with the container 4. For example the perch 3 could be protruding with respect to the container 4. The feeding trough 1 could also be provided with a plurality of perches 3.

Advantageously the container 4 is associated with the tray 2 so that it can move between a first active configuration for collecting scattered feed and a second active configuration for transferring the scattered feed collected in it. With the tray 4 in the second active configuration, the material collected in it can be transferred to an additional container or onto a sheet or panel, in order to then separate the discard materials (e.g. seed husks) and reintroduce the recovered uneaten feed into the tray 2.

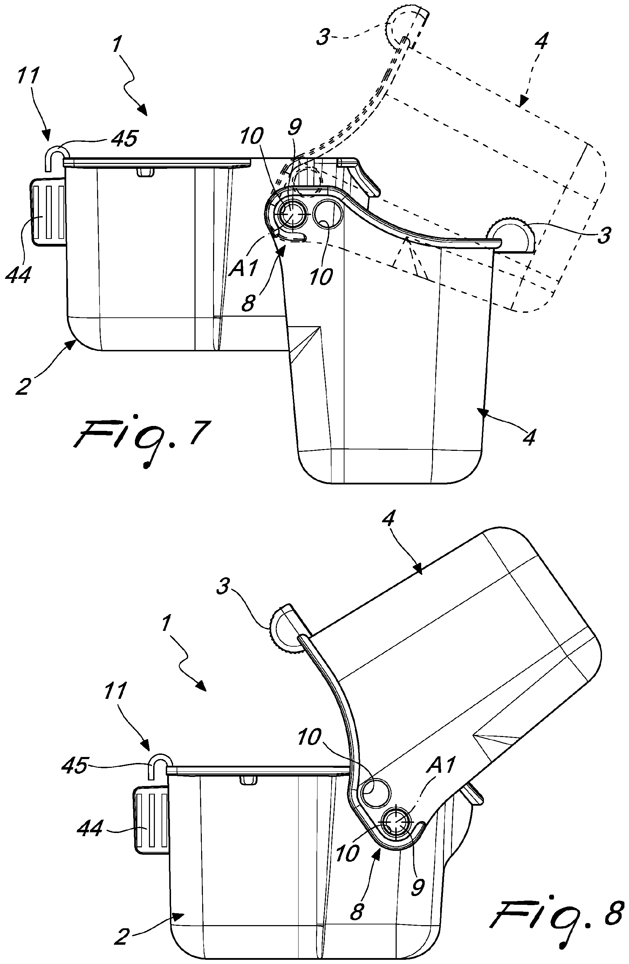

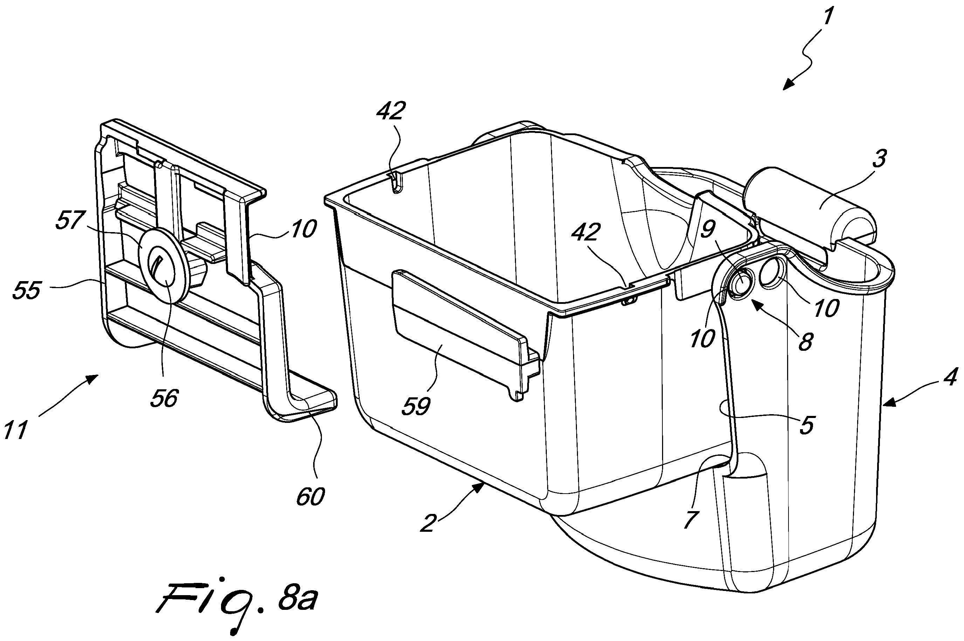

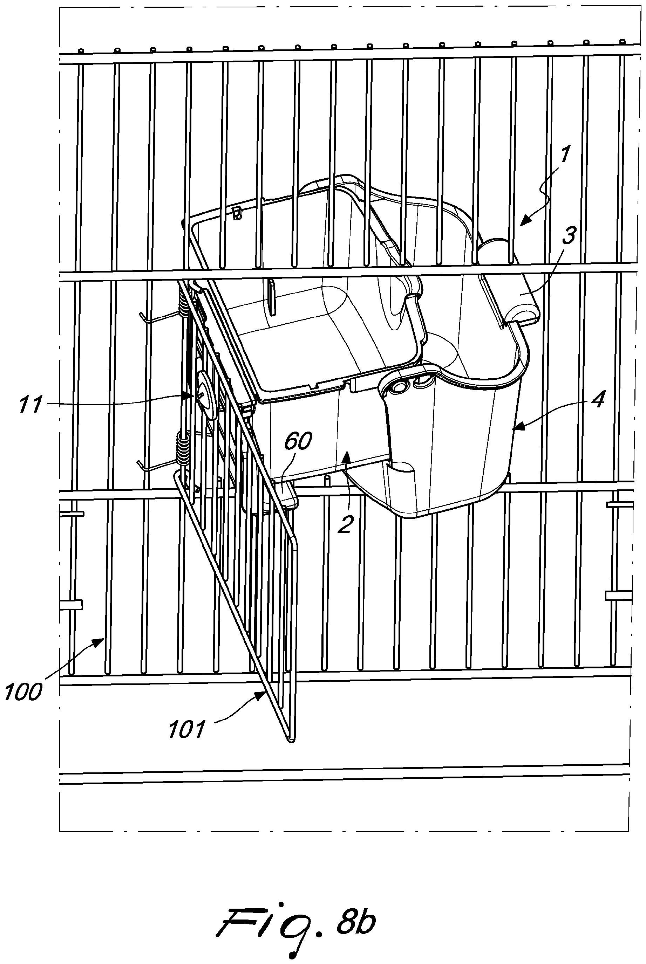

In the preferred embodiments in the accompanying figures the container 4 is associated with the tray 2 so that it can rotate about a first rotation axis A1 which is substantially horizontal, so as to be able to oscillate between the first and the second active configuration (see in particular Figures 7 and 8). In normal conditions of use, the container 4 remains in the first active configuration. Following an external manual intervention the container 2 can be rotated about the first rotation axis A1 with respect to the tray 2 (in the anti-clockwise direction with reference to Figure 7) until it is in the second configuration of use, in order to recover the feed collected inside it as described above.

The container 4, at the face directed toward the tray 2, is provided with an opening 5 which substantially matches the profile of the tray. In the first active configuration the tray 2 has a portion that protrudes inside the container 4.

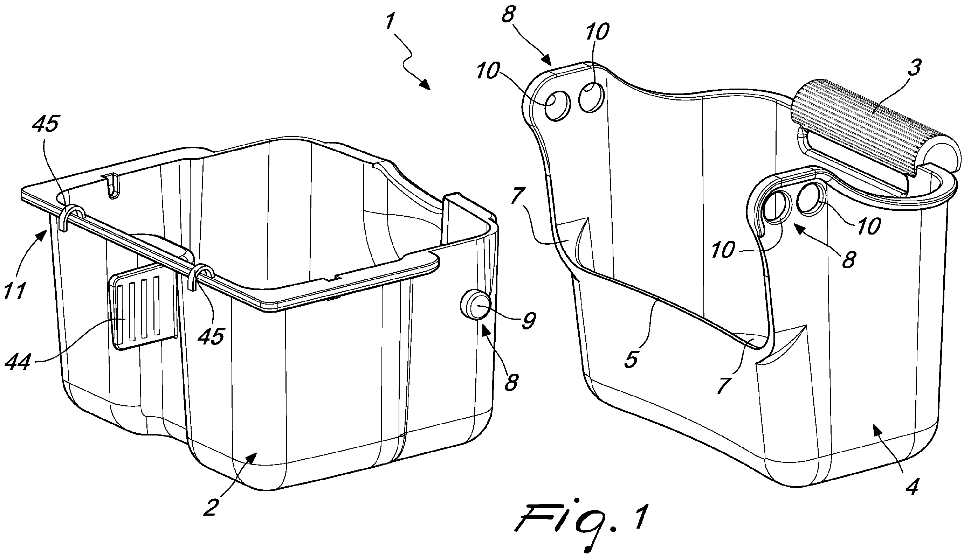

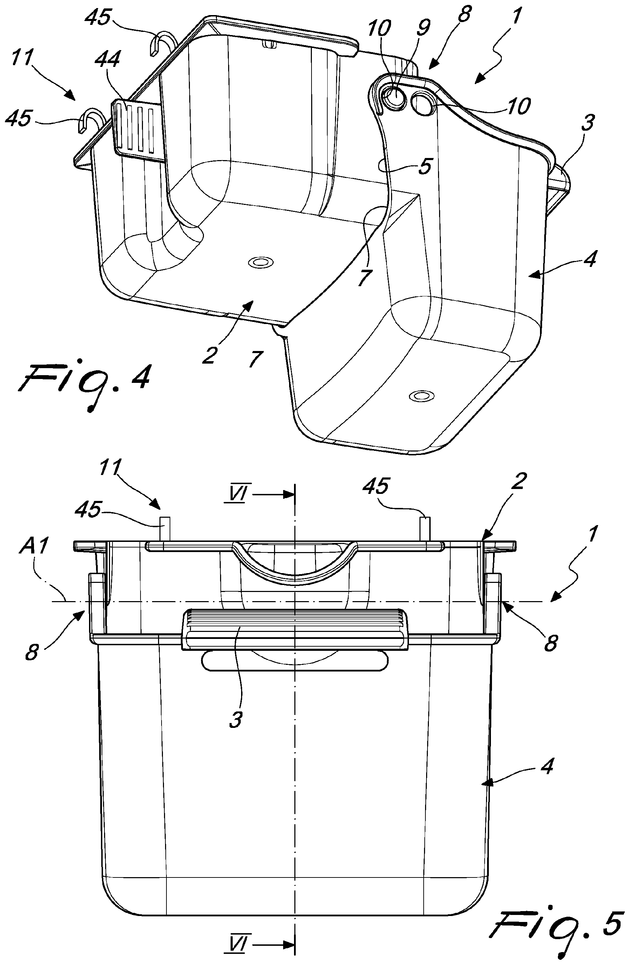

Furthermore the rim of the opening 5 is contoured to define a seat 7 for the abutment of the container 4 against the tray 2, so as to keep it in the first active configuration even under the action of the weight of the bird resting on the perch 3 (see in particular Figures 1 and 4).

The material gathered inside the container 4 exits through the opening 5 when the container is brought to the second active configuration.

The feeding trough 1 comprises hinge means 8 interposed between the container 4 and the tray 2, which comprise at least one pivot 9 associated with either of those elements and at least one corresponding insertion hole 10 associated with the other one of either of those elements. Preferably the hinge means 8 have at least two holes 10 for each pivot 9, which are distributed transversely to the first rotation axis A1, so that the pivot 9 can be inserted alternatively into one of the two holes 10 in order to vary the distance between the perch 3 and the tray 2 as a function of the size of the bird that uses the feeding trough 1.

Usefully the hinge means 8 have two pivots 9 which protrude on opposite sides of the tray 2 along the first rotation axis A1, of which only one is visible in each instance in the figures, and two pairs of holes 10 for each one of these pivots which are defined in the side walls of the container 4.

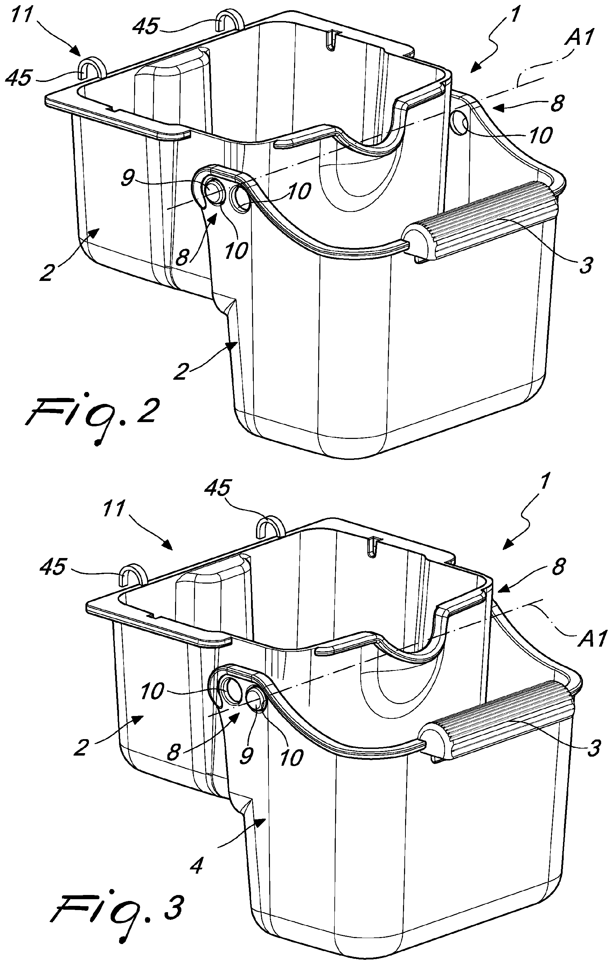

In Figures 2 and 3, for example, the tray 1 is shown with the container 4 hinged to the tray 2 in the two different conditions of assembly in order to vary the distance between the perch 3 and the tray.

The tray 2 can have handgrip element 44 in order to facilitate the gripping thereof during the separation of tray 2 and container 4.

In a further embodiment, not shown, the container 4 can be associated with the tray 2 differently, for example using reversible connecting means, kept coupled in the first active configuration and to be decoupled in order to move the container 4 with respect to the tray 2 and bring it to the second active configuration.

The possibility is not ruled out either of the container 4 and the tray 2 being made in a single piece, so being fixed to each other. In this case the feeding trough 1 can be tipped onto a sheet or a shelf in order to decant thereon the feed collected in the container 4 and any feed that remains in the tray 2, in order to then reintroduce all of it into the tray.

The feeding trough 1 is further provided with means 11 for temporary connection to a bird cage. In fact, in use the feeding trough 1 is associated with one of the mesh walls of a conventional cage, with the tray 2, the container 4 and the corresponding perch 3 protruding inside it.

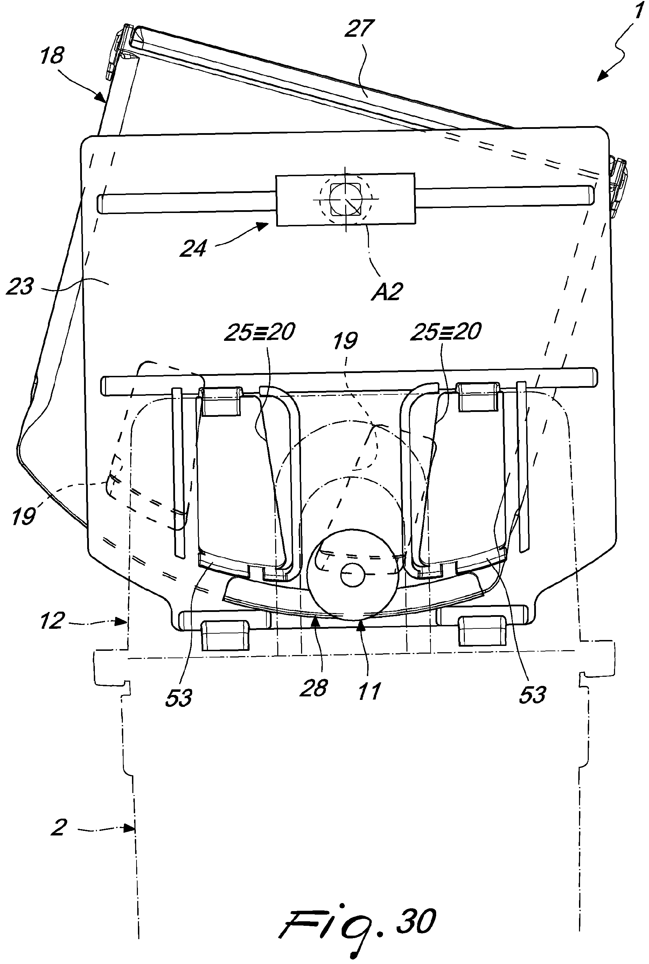

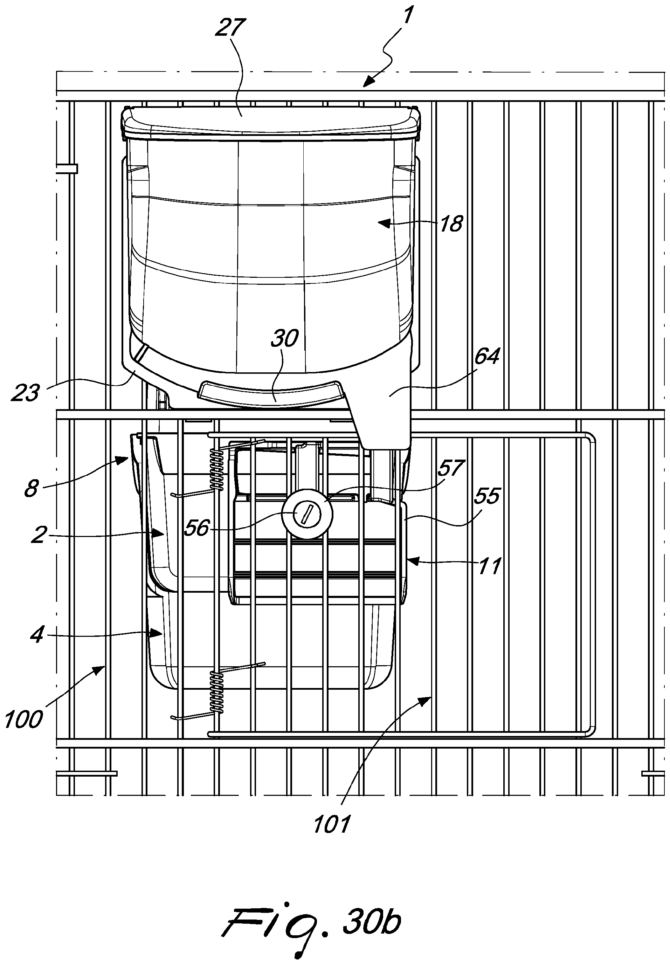

Preferably (as shown in Figures 8b and 30b) the feeding trough 1 is associated with the mesh wall 100 of a bird cage at one of the opening doors 101 that are conventionally provided for access to the inside of the cage.

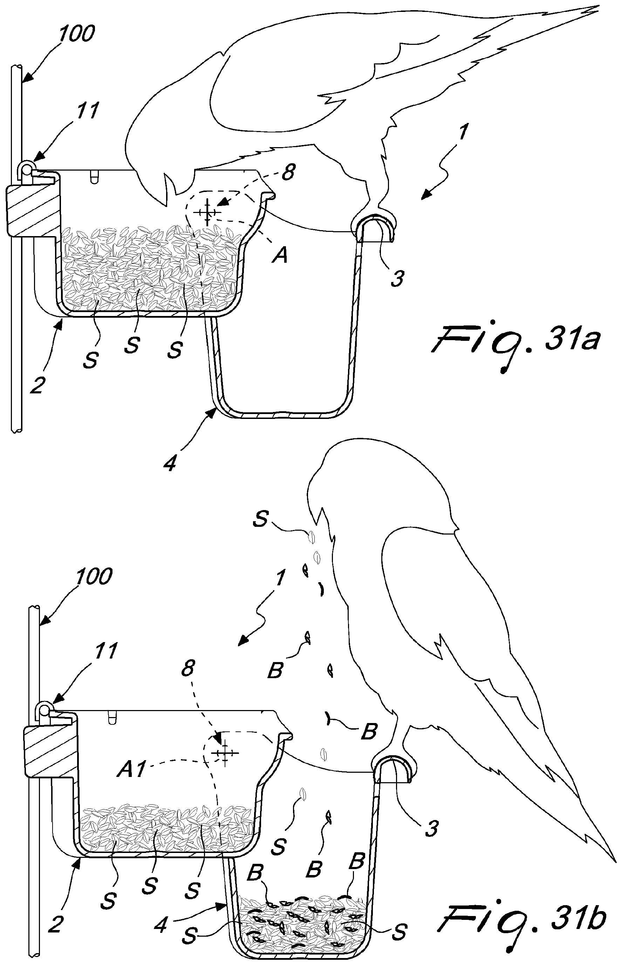

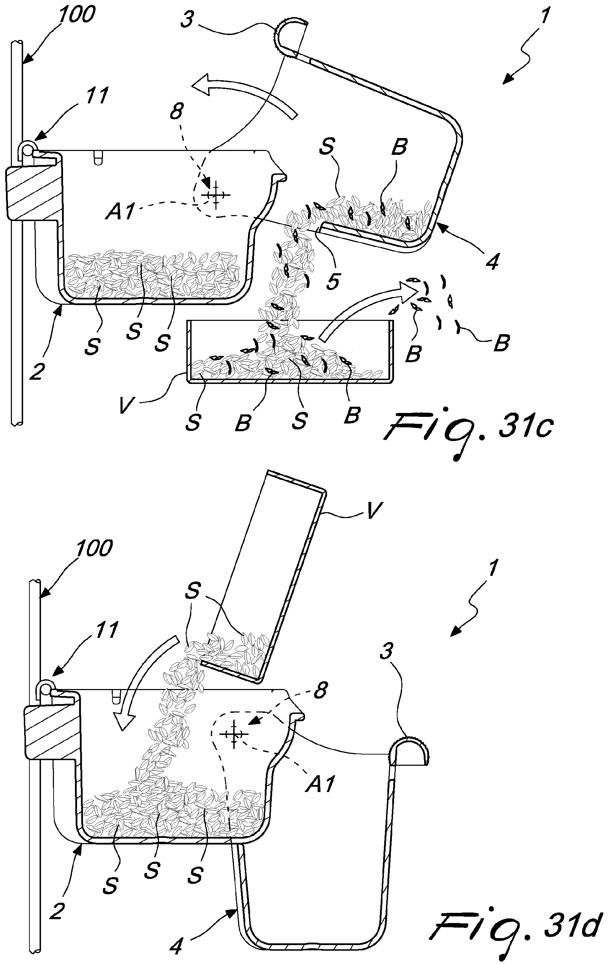

Figures 31a, 31b, 31c and 31d illustrate successive steps of using the feeding trough 1.

The bird resting on the perch 3 begins feeding in the tray 2 that has just been filled with seeds S, with the container 4 still empty (Figure 31a).

After some time, the scattered feed is deposited in the container 4, and is constituted by uneaten seeds S that fell accidentally from the beak of the bird and by husks B or other materials discarded by the bird (Figure 31b).

When it is desired to recover the feed collected in the container 4, it is rotated about the first rotation axis A1, until it arrives in the second active configuration, making the seeds S and husks B fall through the opening 5 in order to collect them on a platter V or the like (Figure 31c).

Subsequently the husks B in the platter V are removed, while the seeds S are reintroduced into the tray 2 in order to be reused by the bird (Figure 31d).

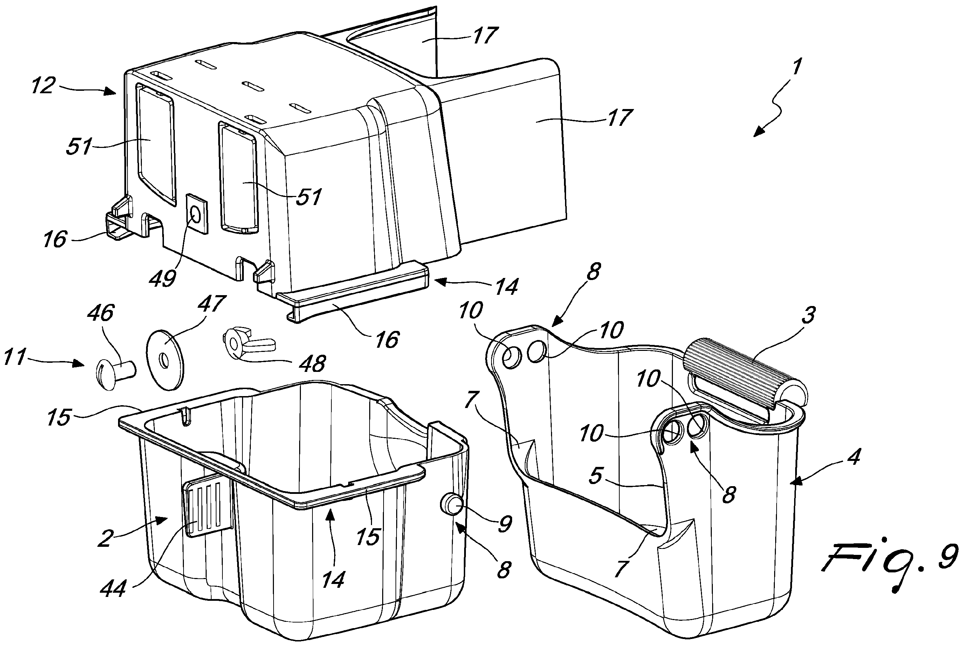

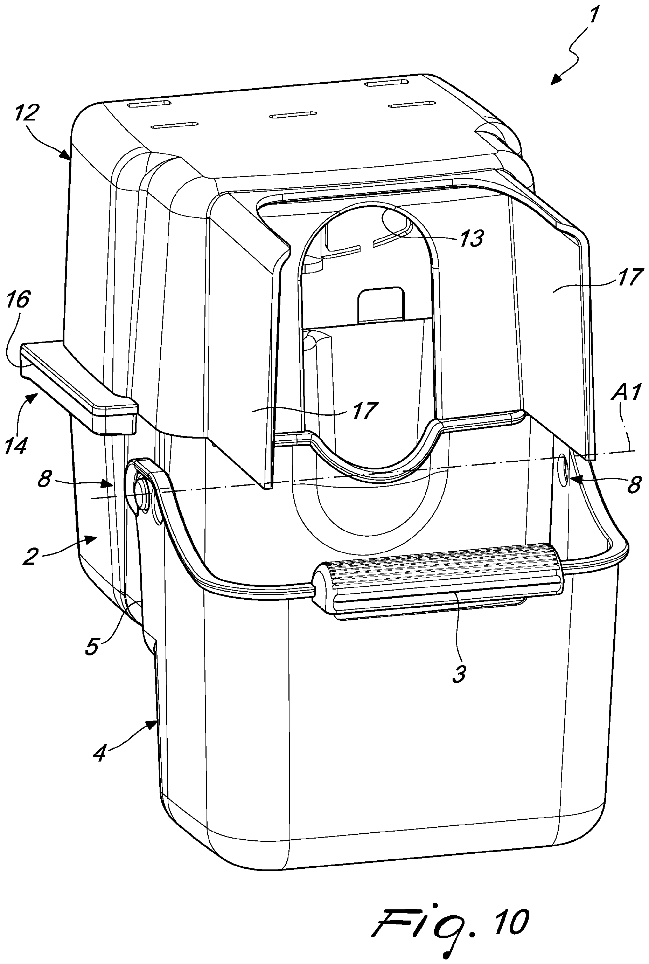

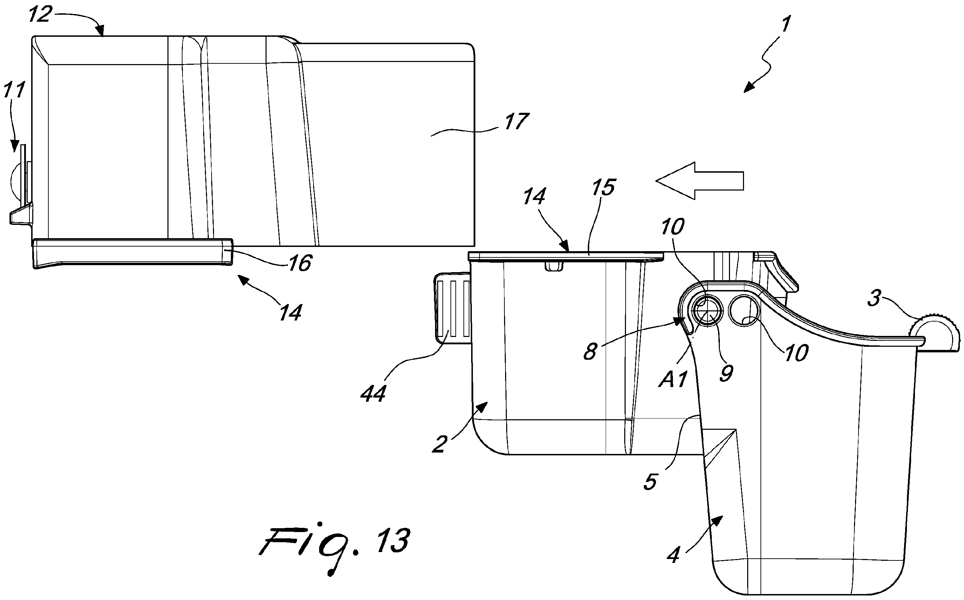

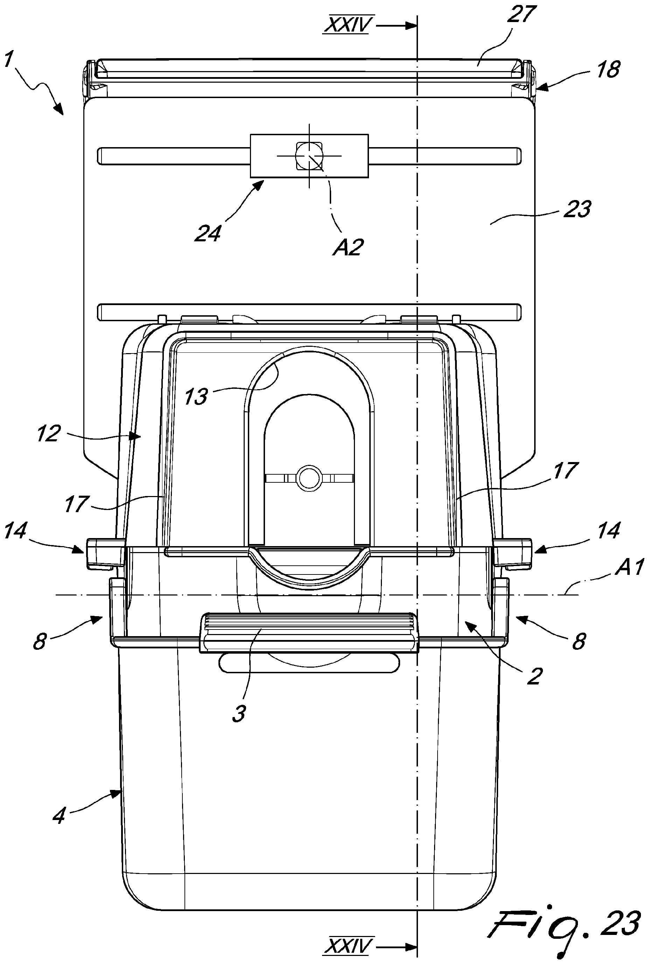

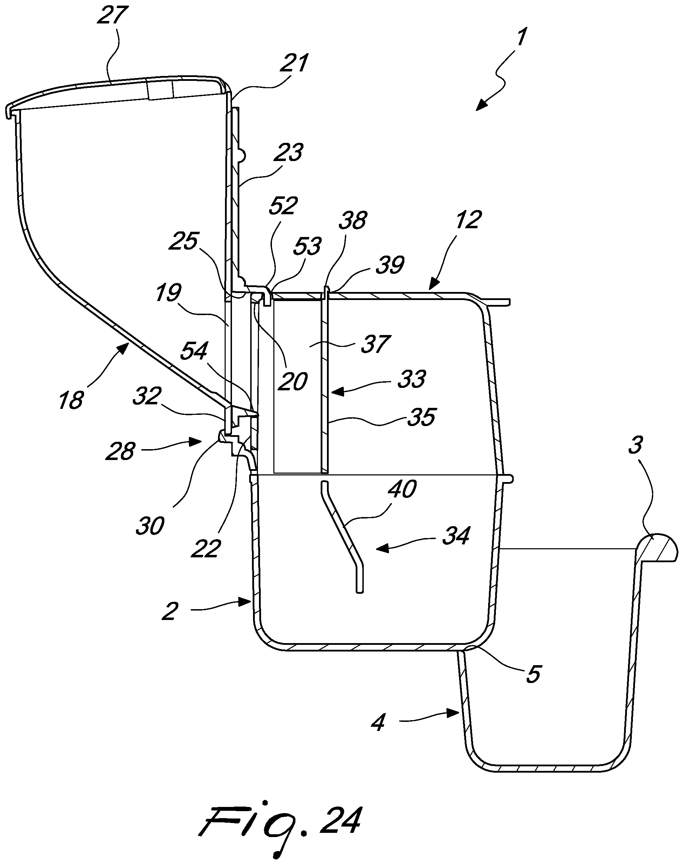

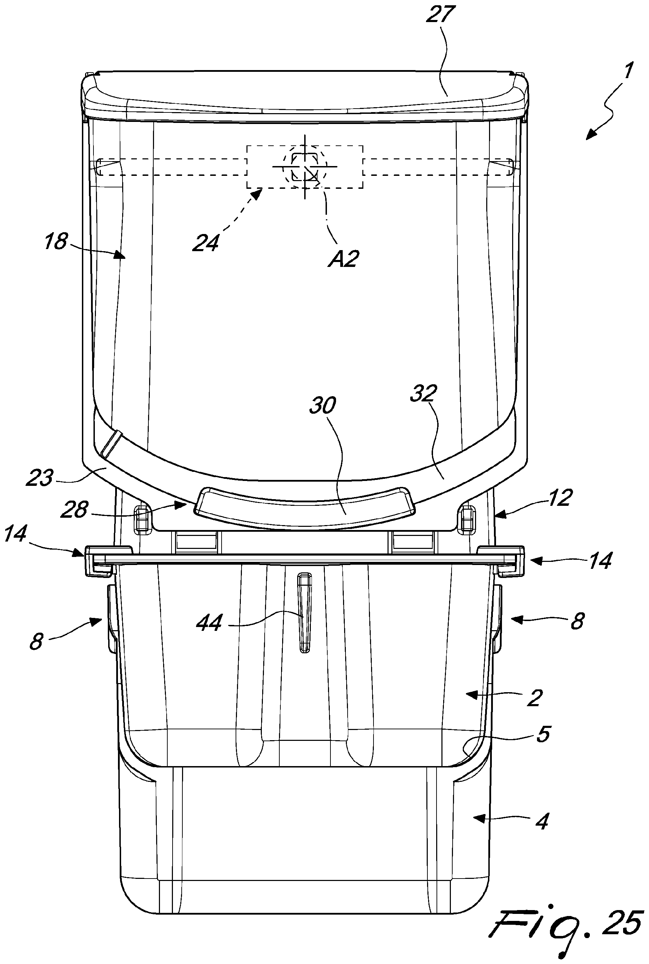

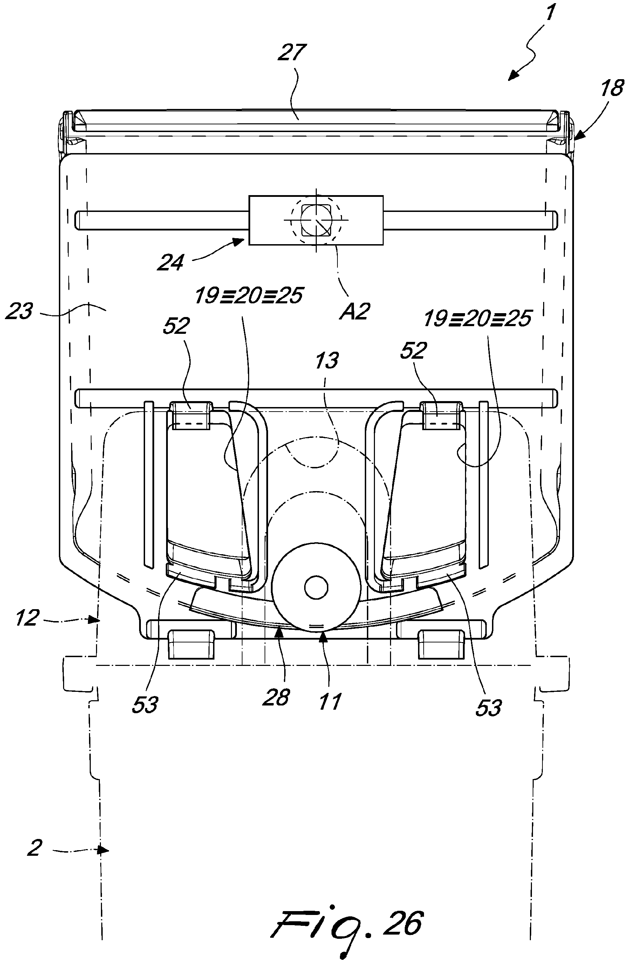

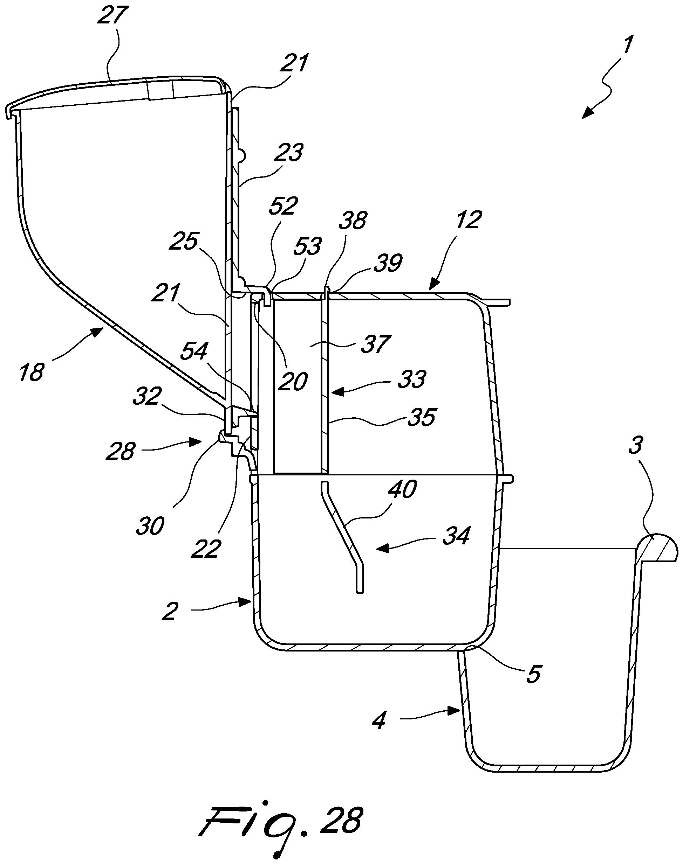

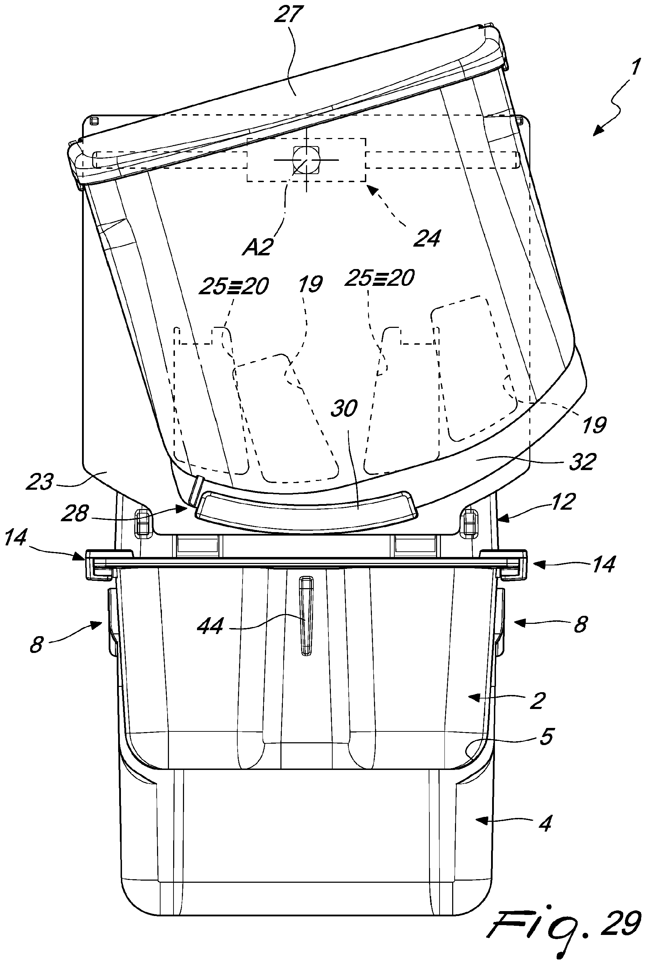

In order to further increase the recovery of feed, the feeding trough 1 can have a covering element 12 associated in an upper region with the tray 2 and provided with at least one door 13 for the head of the bird to pass through (Figures 9-30b).

The covering element 12 is constituted by a box-like shell which is open in a lower region, and is provided with a lower edge that substantially matches with the upper margin of the tray 2. The door 13 is defined in the front wall of the covering element 12 directed toward the container 4 and the perch 3.

Usefully the covering element 12 and the tray 2 can be associated using sliding coupling means 14 which can entail, for example, a pair of profiles 15 associated with the tray 2 in an upper region and respective guides 16 associated with the covering element 12 in a lower region, along which these profiles are slideably inserted.

The profiles 15 and the associated guides 16 are mutually parallel and extend in a horizontal direction, perpendicular to the first rotation axis A1.

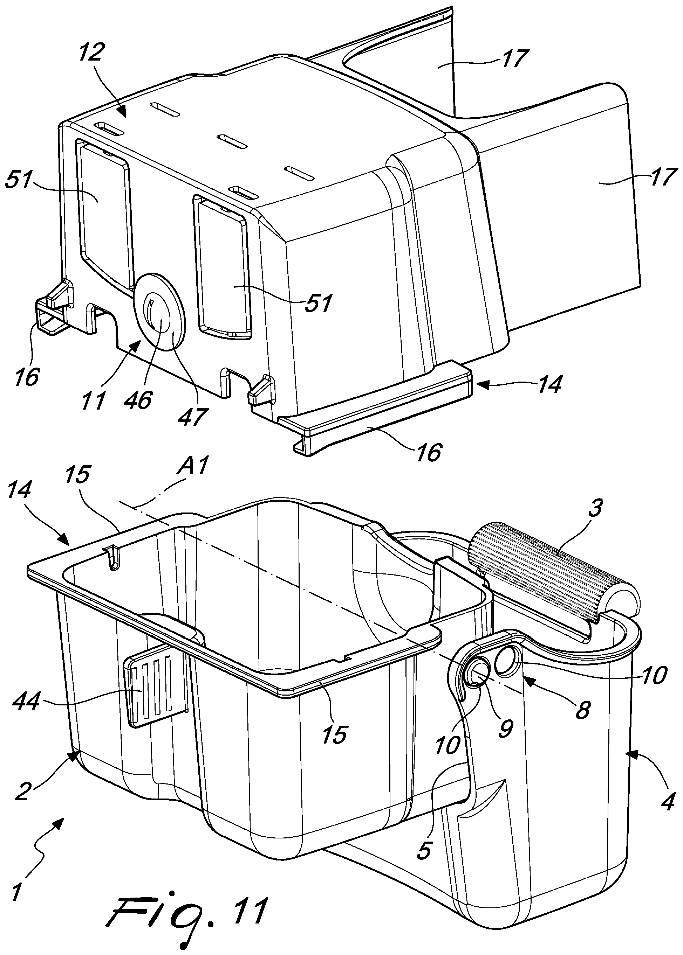

In this manner the covering element 12 and the tray 2 can be coupled/decoupled by making one slide with respect to the other (see in particular Figures 11-14). Generally, in use the tray 2 is moved, together with the container 4 and with the perch 3, while the covering element 12 remains hitched to the cage with the temporary connection means 11.

In use, when the guides 16 are slid over the profiles 15, the covering element 12 hitched to the cage also supports the weight of the tray 2 and of the container 4 with the corresponding perch 3.

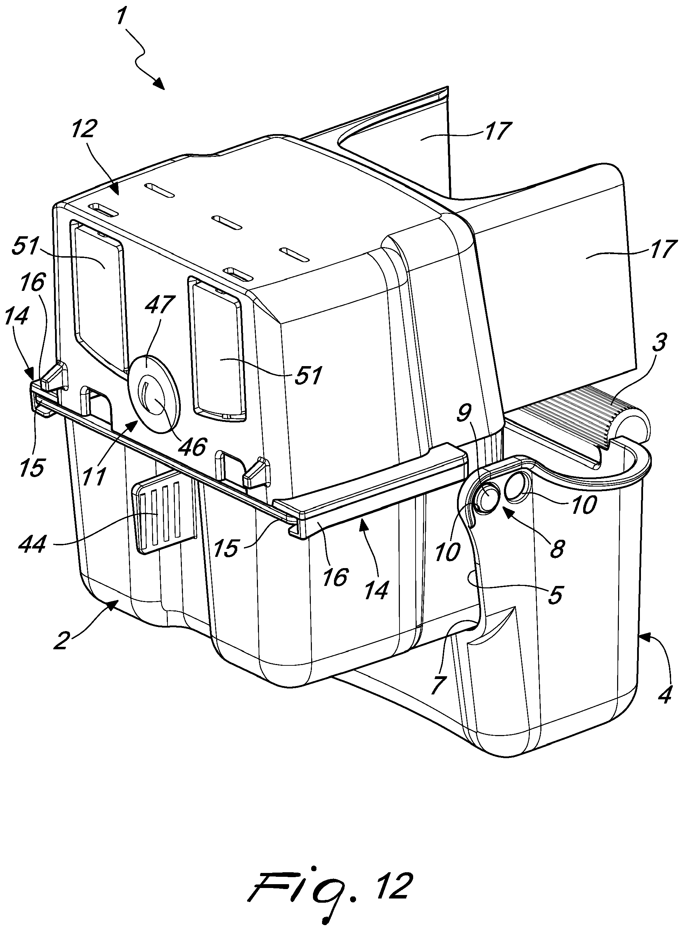

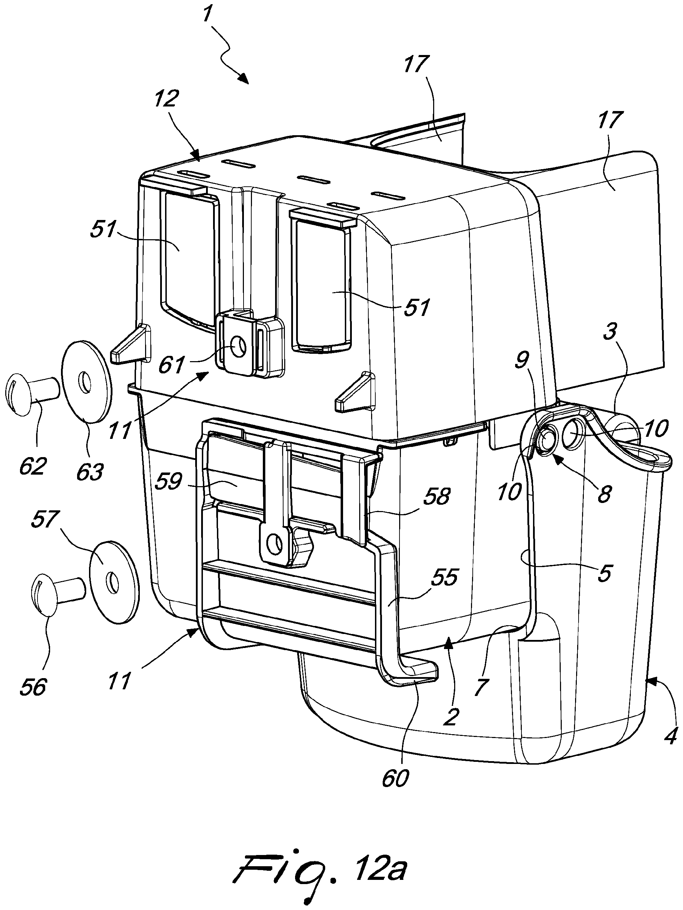

In any case, the possibility is not ruled out that the tray 2 and the covering element 12 could be connected to each other differently, for example using reversible interlocking means, or they could simply be placed next to each other, and be provided with respective means 11 for temporary connection to the cage (Figure 12a).

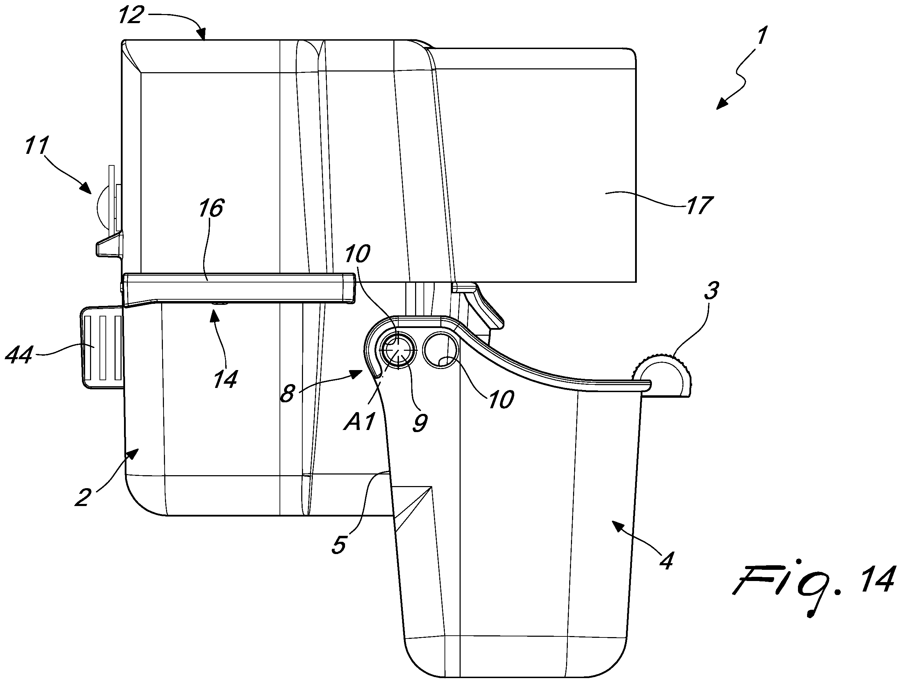

Usefully the feeding trough 1 has a pair of containment wings 17 which protrude externally from the covering element 12 and are arranged laterally on opposite sides of the door 13. The wings 17 extend above the container 4 (Figure 14). The wings 17 make it possible to further reduce the dispersion of feed, in that the feed that exits from the side of the beak of the bird while it is straightening up on the perch 3 is conveyed by these wings into the container 4.

If the feeding trough 1 has several perches 3, the covering element 12 is provided with the same number of doors 13, optionally with associated wings 17, one at each one of them. Alternatively, the covering element 12 could have a single door 13 which faces toward all the perches 3, with optional associated wings 17 at the lateral ends.

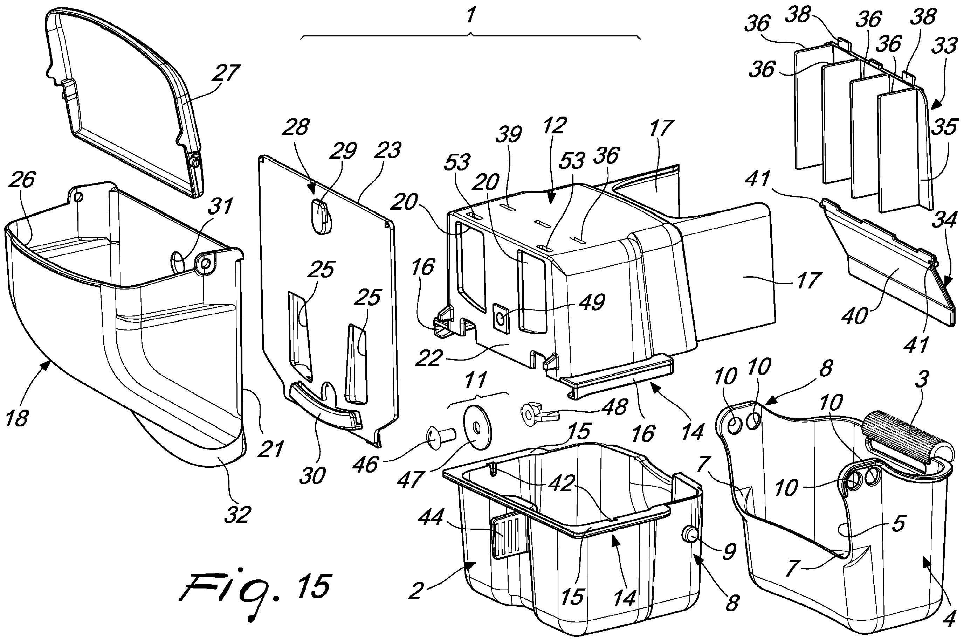

In a further embodiment, the feeding trough 1 comprises a vessel 18 for storing a reserve of feed, which is associated with the covering element 12 (Figures 15-30). The internal chamber of the vessel 18 is adapted to communicate with the tray 2 in order to decant the feed into it through the covering element 12, via first openings 19 defined in the vessel and second openings 20 defined in the covering element 12, which are arranged facing each other.

The vessel 18 has a substantially flat first wall 21 in which the first openings 19 are defined, and which is adapted to be associated with the covering element 12.

The covering element 12 is also provided with a substantially flat second wall 22 in which the second openings 20 are defined, and which is adapted to be associated with the vessel 18.

Preferably the second wall 22 is arranged opposite the door 13, so that the vessel 18 protrudes with respect to the covering element 12 and to the tray 2 on the opposite side with respect to the container 4.

In use, the first and the second wall, respectively, 21 and 22 are arranged on opposite sides of the cage. In fact, the covering element 12 with the tray 2 and the container 4 are accommodated inside the cage, while the vessel 18 remains accessible outside the cage.

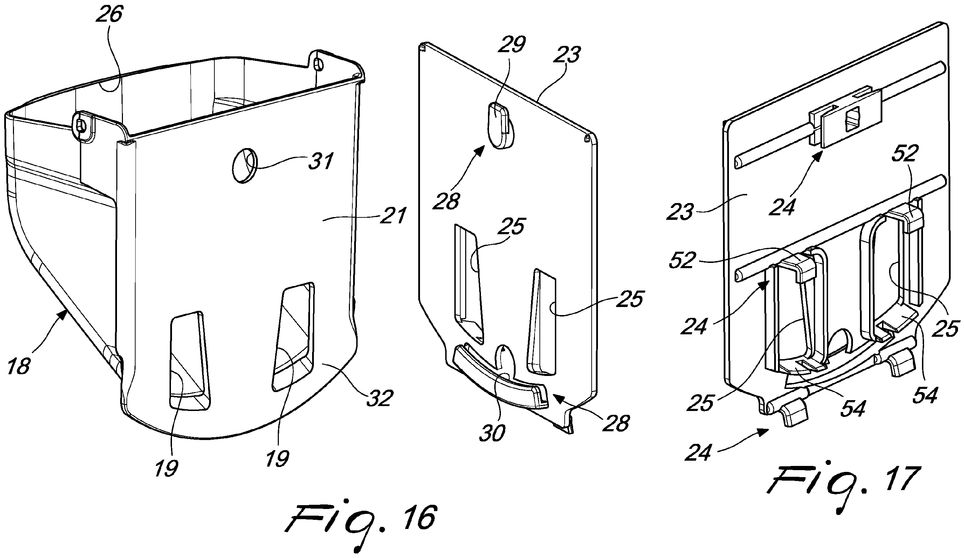

Usefully, there is a panel 23 for fixing the vessel 18 to the cage, which is provided, on one side, with means 24 for fastening to the cage and, on the opposite side, means 28 for supporting the vessel 18 (Figures 16 and 17).

In this manner, the panel 23 can remain anchored to the cage while the vessel 18 can be removed, as needed, for cleaning.

The panel 23 is provided with third openings 25 for placing the first openings 19 of the vessel 18 in communication with the second openings 20 of the covering element 12.

The vessel 18 is provided with a top-up port 26 for the introduction of new feed, which is associated with a lid 27 that can be opened. Preferably the top-up port 26 is positioned at the upper portion of the vessel 18. Preferably the lid 27 is hinged to the vessel 18.

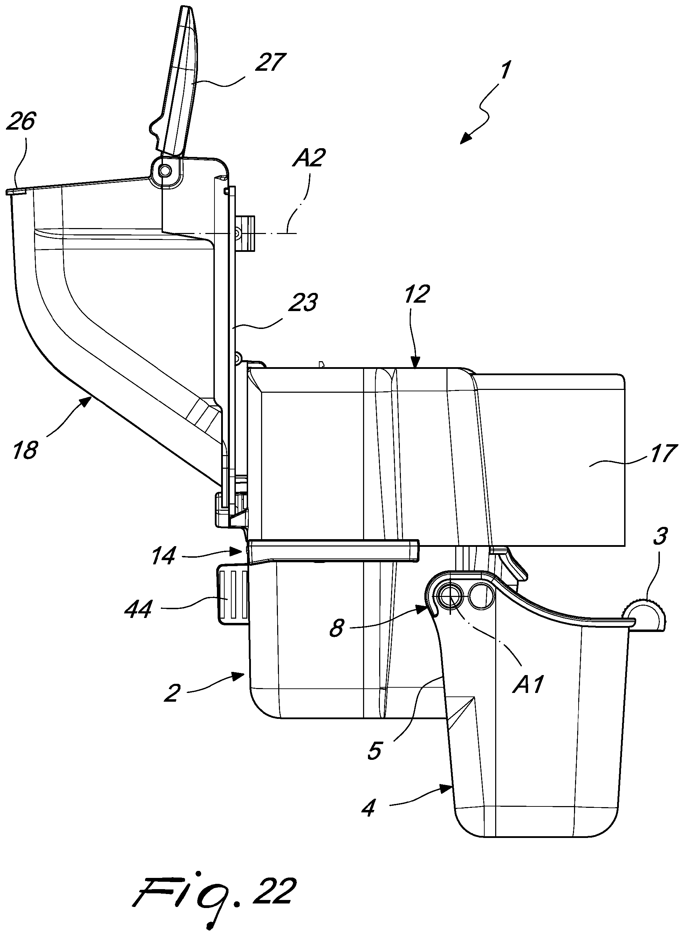

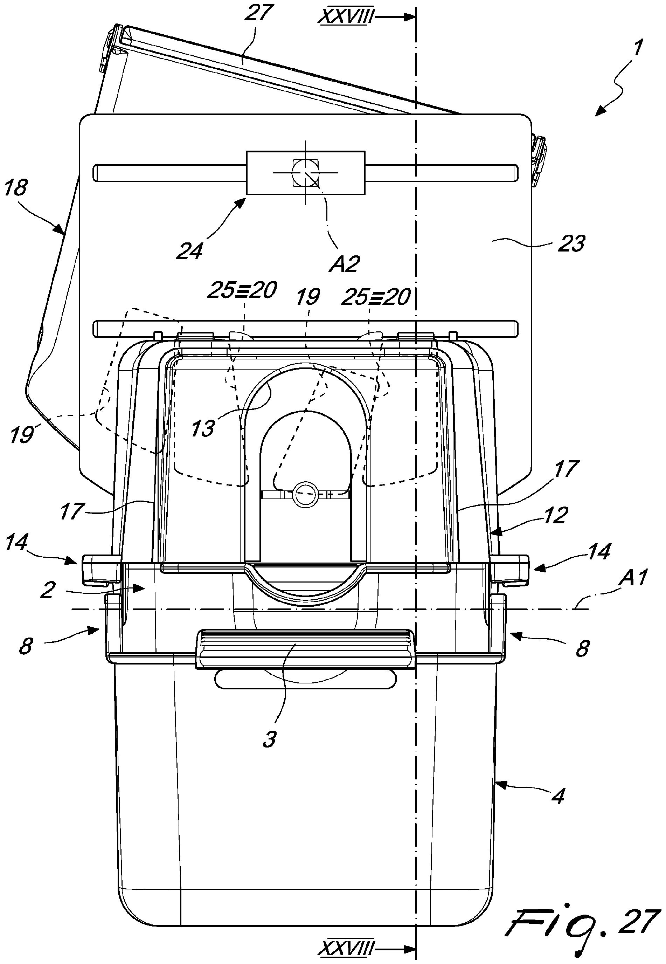

Advantageously the vessel 18 is associated with the covering element 12 so that it can rotate about a second rotation axis A2 between a first active configuration, in which the first and second openings, respectively 19 and 20, are in mutual communication (Figures 22-26), and a second active configuration, in which these first and second openings are in mutual isolation (Figures 27-30). The first and the second active configuration are angularly shifted out of phase about the second rotation axis A2.

The second rotation axis A2 is substantially horizontal and, preferably, perpendicular to the first axis A1.

It should be noted that the panel 23 makes it possible to decouple the vessel 18 and the covering element 12, thus allowing the movement of the vessel 18 between the first and the second active configuration. The panel 23 on the other hand remains fixed with respect to the covering element 12, with the associated third openings 25 facing toward the second openings 20. The panel 23, in fact, on the face directed toward the covering element 12, is provided with bent elements 52 which are adapted to be inserted into further slots 53 defined on the roof of the covering element and with protruding tabs 54 which are adapted to abut against the lower margin of the second openings 20.

Under normal conditions of use, the vessel 18 is maintained in the first active configuration in order to top up the tray 2 with feed. If it is necessary to remove the tray 2 for cleaning and maintenance or in order to decant the feed collected in the container 4 into it, the vessel 18 is moved to the second active configuration so as to prevent the feed contained in it from falling out and dispersing.

Usefully, the supporting means 28 have a hook 29 for pivoting the vessel 18 about the second rotation axis A2, which protrudes from the upper portion of the panel 23, and a curved bank 30 for guiding the vessel 18 in rotation, which is arranged in the lower portion of the panel (Figure 16).

The first wall 21 of the vessel 18 is provided in an upper region with a hole 31 for inserting the hook 29 and in a lower region with a curved edge 32 which is designed to rest so that it can slide on the bank 30.

Usefully, where the vessel 18 is present, the feeding trough 1 also has either or both of conveyance means 33 for conveying the feed, which are accommodated inside the covering element 12 at the associated second openings 20, and limiting means 34 for limiting the feed that has accumulated on the bottom of the tray 2, which are accommodated inside it.

Preferably the feeding trough 1 comprises both the conveyance means 33, and the limiting means 34.

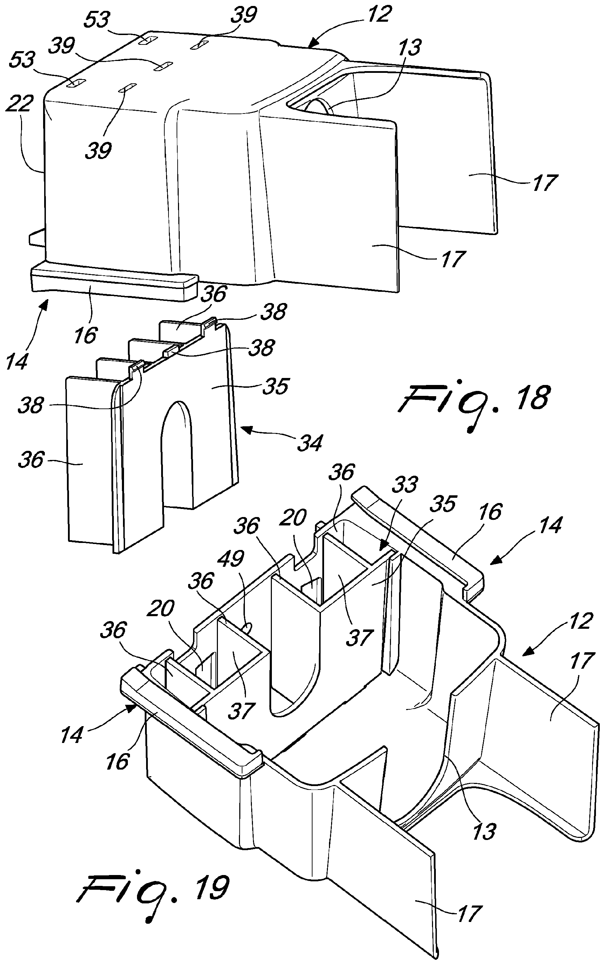

The conveyance means 33 (Figures 18 and 19) are constituted by a dividing element 35 bearing two pairs of fins 36, each one of which defines a respective channel 37 for the feed to fall which faces toward a corresponding second opening 20. The dividing element 35 is provided in an upper region with a plurality of teeth 38 which are adapted to be interlocked in corresponding slots 39 defined on the upper wall of the covering element 12.

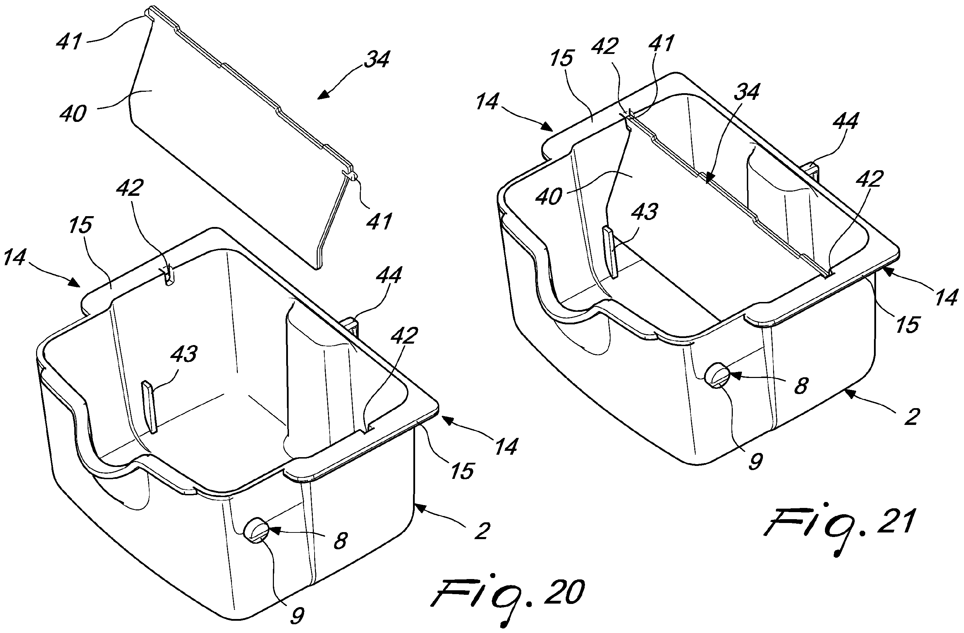

The limiting means 34 (Figures 19 and 20) comprise a hinged partition 40 inside the tray 2. The partition 40 is provided with two pintles 41 which are aligned with each other and which protrude laterally on opposite sides, and are adapted to engage in corresponding seats 42 defined on the tray 2. The tray 2 has abutment elements 43 inside it which are adapted to limit the rotation of the partition 40.

It should be noted that since the components of the feeding trough 1 (the tray 2, the container 4, an optional covering element 12 and an optional storage vessel 18) are preferably provided via the molding of plastic material, in order to reduce the number of molds necessary, the tray 2 can in any case be adapted for the application of the covering element and optionally of the storage vessel 18 (by providing the profiles 15, the seats 42 and the abutment elements 43) even if they are not combined with these elements. Likewise, the covering element 12 can be adapted for the storage vessel 18 application by providing the second openings 20 and the slots 39 and 53 in any case. At the second openings 20 there are breakable laminas 51 which are obtained directly during molding, and which are adapted to be retained if the vessel 18 is not required (Figures 9-14) and to be removed otherwise (Figures 15-30b).

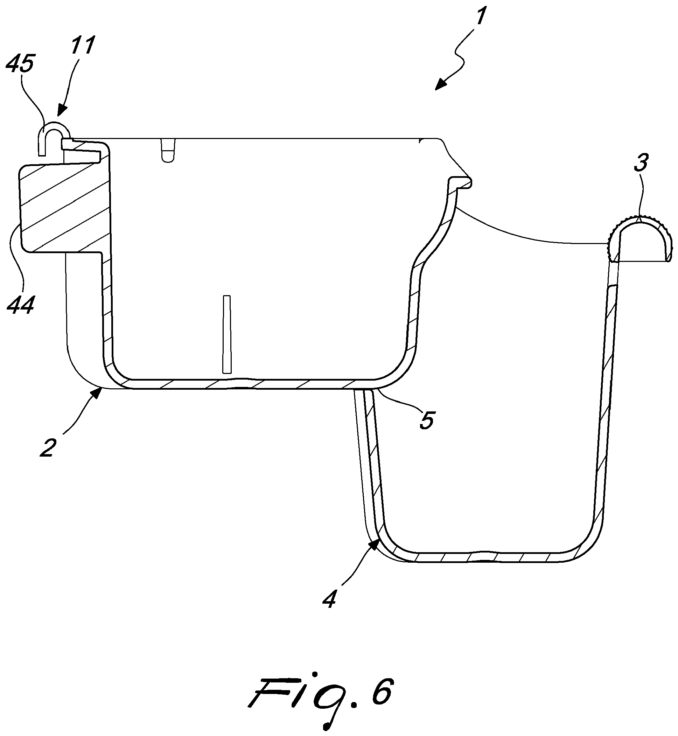

Figures 1-8b show a first embodiment of the feeding trough 1 which includes only the tray 2 and the container 4 provided with a perch 3.

In a first embodiment (Figures 1-8) the means 11 for temporary connection are constituted, for example, by a pair of coupling elements 45 which protrude from the tray 2 on the opposite side with respect to the container 4.

In a second embodiment (Figures 8a and 8b) the means 11 for temporary connection instead consist of a plate 55 adapted to be anchored internally to the door 101 of the cage using a screw 56 with an associated washer 57 which is provided with a sliding seat 58 for a ridge 59 protruding from the tray 2 on the opposite side with respect to the container 4. In this manner, the plate 55 hitched to the door 101 supports the tray 2 and the container 4.

The plate 55 is provided in a lower region with a shelf 60 for supporting the tray 2. By opening the door 101, one can bring out the tray 2 with the container 4, while keeping the plate 55 hitched to the door itself, in order to decant the feed.

Figures 9-14 show a second embodiment of the feeding trough 2 in which the covering element 12 is also present.

In this case, the means 11 for temporary connection are associated with the covering element 12 and can be constituted, for example, by a screw 46 with washer 47 and nut 48, which is adapted to be inserted in a hole 49 defined in the covering element 12.

In use, by screwing the screw 46 into the nut 48, which is arranged inside the covering element 12, which in turn is arranged inside the cage, the washer 47 is tightened against the outside of the cage, thus coupling the covering element 12. The tray 2, with the container 4 and corresponding perch 3, are supported by the covering element 12 when the profiles 15 and the respective guides 13 are coupled together.

Figure 12a shows a variation of the second embodiment of the feeding trough 1 in which the tray 2 and the covering element 12 are placed next to each other, as the respective upper and lower edges are substantially matching, and separate connecting means 11 are provided for each of them, as the sliding coupling means 14 are not provided.

The connecting means 11 provided on the covering element 12 are constituted by an internally-threaded hole 61 in which a screw 62 with associated washer 63 is coupled in order to anchor to the mesh wall of the cage.

The connecting means 11 provided on the tray 2 are of the type of those described with reference to Figures 8a and 8b for anchoring to the door 101.

Figures 15-30b, finally, show a third embodiment of the feeding trough which also includes the storage vessel 18 with an associated fixing panel 23.

The means 11 for temporary connection can be of the type described above with reference to the second embodiment, shown in Figure 9.

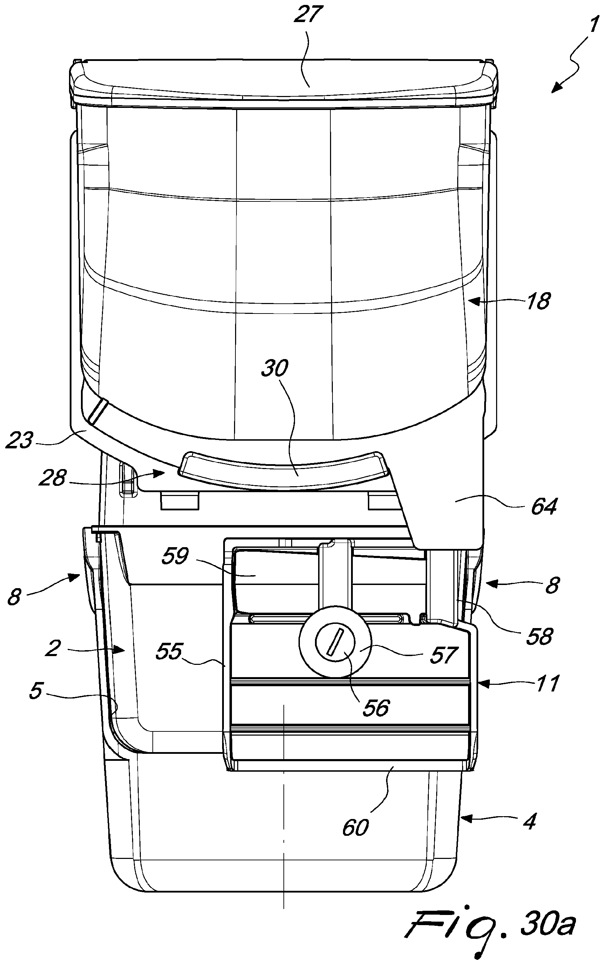

Figures 30a and 30b shows a variation of the third embodiment of the feeding trough 1 in which the tray 2 and the covering element 12 are placed next to each other, so that the respective upper and lower edges are substantially matching, and separate connecting means 11 are provided for each of them, as the sliding coupling means 14 are not provided.

The vessel 18 is connected to the mesh wall 100 of the cage using the panel 23 as described with reference to Figure 15 and following. In use, the vessel 18 is positioned outside the cage and the covering element 12 inside, as shown in Figure 30b.

The connecting means 11 associated with the tray 2 are of the type of those described with reference to Figures 8a and 8b. The tray 2 with the container 4 are positioned, in use, on the inside of the door 101.

The vessel 18 is provided in a lower region with a side peduncle that prevents the door 101 from being opened when it is in the first active configuration.

In practice it has been found that the invention as described achieves the intended aim and objects and, in particular, attention is drawn to the fact that the feeding trough according to the invention makes it possible to reduce, or even eliminate, the waste of feed, thus reducing the maintenance cost of the bird and the frequency of the cleaning and maintenance required. These aspects, which are already advantageous for owners of one or more birds, are particularly relevant for breeders who need to manage a large number of cages.

Furthermore, the feeding trough according to the invention makes it possible to improve the conditions of hygiene in which the birds live inside the cages and the level of quality of the feed that they consume, thus favoring their good health.

Furthermore the feeding trough according to the invention is practical to use and can be provided in a modular fashion, since it can be assembled in various different modes (with or without the covering element and the storage vessel), and it is also adaptable to different application requirements.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements without for this reason departing from the scope of protection claimed herein.

The disclosures in Italian Patent Application No. 102020000029636 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A feeding trough (1) for birds, which comprises a tray (2) for containing feed which is associated with at least one perch (3) for a bird to rest on, **characterized in that** it comprises a container (4) for collecting scattered feed, which is open in an upper region and is interposed between said tray (2) and said at least one perch (3).

2. The feeding trough (1) according to claim 1, **characterized in that** said container (4) is associated with said tray (2) so that it can move between a first active configuration for collecting scattered feed and a second active configuration for transferring the scattered feed into said tray.

3. The feeding trough (1) according to claim 2, **characterized in that** said container (4) is associated with said tray (2) so that it can rotate about a first rotation axis (A1) which is substantially horizontal between the first and the second active configuration.

4. The feeding trough (1) according to claim 3, **characterized in that** it comprises hinge means (8) interposed between said container (4) and said tray (2) which comprise at least one pivot (9) associated with either said container (4) or said tray (2) and at least two holes (10) associated with the other one of either said container (4) or said tray (2), the holes (10) being distributed transversely to said first rotation axis (A1) and the pivot (9) being adapted to be inserted alternatively into one of said holes in order to vary the distance between said perch (3) and said tray (2).

5. The feeding trough (1) according to claim 2, **characterized in that** said container (4) comprises an opening (5) in the face directed toward said tray (2) which substantially matches the profile of said tray, in the first active configuration the tray (2) having a portion which protrudes inside the container (4).

6. The feeding trough (1) according to claim 5, **characterized in that** said opening (5) comprises a seat (7) for the abutment of said container (4) against said tray (2) in the first active configuration.

7. The feeding trough (1) according to claim 1, **characterized in that** said at least one perch (3) is associated with said container (4) at the upper edge on the opposite side with respect to said tray (2).

8. The feeding trough (1) according to one or more of the preceding claims, **characterized in that** it comprises a covering element (12) which is associated in an upper region with said tray (2) and is provided with at least one door (13) for the passage of the head of the bird.

9. The feeding trough (1) according to claim 8, **characterized in that** said covering element (12) and said tray (2) are associated by way of sliding coupling means (14).

10. The feeding trough (1) according to claim 8, **characterized in that** it comprises a pair of containment wings (17) which protrude externally to said covering element (12) above said container (4) and are arranged laterally on opposite sides of said at least one door (13).

11. The feeding trough (1) according to one or more of claims 8-10, **characterized in that** it comprises a vessel (18) for storing a reserve of feed which is associated with said covering element (12), the internal chamber of said vessel (18) being adapted to communicate with said tray (2) through said covering element (12) by way of first openings (19) and second openings (20) which are associated respectively with said vessel and with said covering element.

12. The feeding trough (1) according to claim 11, **characterized in that** said vessel (18) is associated with said covering element (12) so that it can rotate about a second rotation axis (A2) between a first active configuration, in which the first and second openings (19, 20) are in mutual communication, and a second active configuration, in which the first and second openings (19, 20) are in mutual isolation.

13. The feeding trough (1) according to claim 11, **characterized in that** said vessel (18) is provided with a top-up port (26) associated with a lid (27) which can be opened.

14. The feeding trough (1) according to one or more of claims 11-13, **characterized in that** it comprises feed conveyance means (33) accommodated inside said covering element (12) at said second openings (20).

15. The feeding trough (1) according to one or more of claims 11-14, **characterized in that** it comprises limiting means for limiting the feed accumulated on the bottom of said tray (2) which are accommodated inside it.

16. The feeding trough (1) according to one or more of the preceding claims, **characterized in that** it comprises means (11) for temporary connection to a bird cage.
